Europäisches Patentamt

European Patent Office

Office européen des brevets

(19)

(11) Veröffentlichungsnummer: **0 220 599 B1**

(12) **EUROPÄISCHE PATENTSCHRIFT**

(45) Veröffentlichungstag der Patentschrift: **26.08.92**

(51) Int. Cl.5: **F16K 31/365**, G05D 16/06, F16K 27/02

(21) Anmeldenummer: **86114217.2**

(22) Anmeldetag: **14.10.86**

(54) **Druckminderer.**

(30) Priorität: **31.10.85 DE 3538828**

(43) Veröffentlichungstag der Anmeldung:
**06.05.87 Patentblatt 87/19**

(45) Bekanntmachung des Hinweises auf die
Patenterteilung:
**26.08.92 Patentblatt 92/35**

(84) Benannte Vertragsstaaten:
**AT BE CH DE ES FR GB IT LI LU NL SE**

(56) Entgegenhaltungen:
DE-A- 2 105 419     FR-A- 1 491 901
FR-A- 1 537 877     GB-A- 2 017 264
US-A- 1 566 255     US-A- 1 739 926
US-A- 2 591 407     US-A- 2 597 478
US-A- 2 739 611     US-A- 3 054 529
US-A- 3 712 333     US-A- 4 357 921

(73) Patentinhaber: **DruVa-Armaturen GmbH
Wernher-von-Braun-Strasse 5-9
W-6904 Eppelheim(DE)**

(72) Erfinder: **Siebald, Hansjürgen
Brunnengasse 19
W-6940 Weinheim(DE)**

(74) Vertreter: **Kehl, Günther, Dipl.-Phys. et al
Patentanwälte Hagemann & Kehl Ismaninger
Strasse 108 Postfach 86 03 29
W-8000 München 86(DE)**

## Beschreibung

Die Erfindung bezieht sich auf einen Druckminderer für Gase höchster Reinheit mit einem massiven, blockförmigen Gehäusegrundkörper, der mehrere, mit vorstehenden rohrförmigen Anschlußstutzen in Verbindung stehende, sternförmig auf die Mitte des Gehäusegrundkörpers zulaufende Fluidkanäle aufweist.

Ein Druckminderer dieser Art ist aus der US-A-1 739 926 bekannt. Zur Herstellung der vorstehenden Anschlußstutzen sind bei diesem bekannten Druckminderer Bohrungen mit Innengewinden vorgesehen, die rohrförmige Anpassungsstücke aufnehmen. Die Anpassungsstücke weisen an beiden Enden Außengewinde auf und stehen mit jeweils einem Ende über den Gehäusegrundkörper vor. Bei einer solchen Art der Verbindung zwischen den Anschlußstutzen und dem Gehäusegrundkörper entstehen Ritzen und Spalten, sodaß sich der Druckminderer nicht für die Verarbeitung von Gasen hoher Reinheit eignet, wie sie beispielsweise in der Mikroelektronik gebraucht werden.

Die Anschlußstutzen dieser bekannten Druckminderer sind mit Kanälen in dem Gehäusegrundkörper verbunden, die an unterschiedlichen Radialpositionen enden und meist in axiale Kanäle übergehen, so daß über die Anschlußstutzen und die Fluidkanäle ein Fluid an die gewünschten Teile des Regelventils des Druckminderers herangeführt oder von diesem abgeleitet werden kann. Bei den bekannten Druckminderern sind die rohrförmigen Anschlußstutzen in entsprechende Bohrungen in dem kompakten Gehäusegrundkörper eingepaßt und dort verschweißt.

Aus der DE-A-21 05 419 ist eine Verteilerarmatur für mehrere Versorgungsleitungen bekannt, die aus einer Hauptleitung und mehreren, senkrecht zu der Hauptleitung abzweigenden Nebenleitungen besteht. Die Nebenleitungen enthalten kurz nach der Abzweigestelle einen Ventilkörper. Die Abzweigventile sind mit ihren Ventilkörpern direkt an die Hauptleitung angegossen, d. h. einstückig mit dieser ausgebildet. Ein Druckminderer ist aus dieser Druckschrift nicht bekannt.

Wenn ein Druckminderer der eingangs genannten Art für Dotiergase von höchster Reinheit verwendet wird, wie sie beispielsweise in der Mikroelektronik zur Herstellung von Halbleiterbauelementen gebraucht werden, stellen sich erhebliche Nachteile und Störungen ein. So wurden beispielsweise immer wieder trotz sorgfältigster Vorkehrungen kleinste Partikel von Staub und Wasser in dem den Druckminderer verlassenden Gasstrom festgestellt. Derartige Störpartikel sind bei der hohen Präzision, die heutzutage bei der Herstellung von elektronischen Halbleiterbauelementen gefordert wird, nicht tolerierbar, da diese Partikel bei der heute üblichen dichten Flächenbelegung von Halbleiterelementen bereits zu erheblichen Störungen des Bauelements, d. h. zur Produktion von Ausschuß führen können.

Der Erfindung liegt daher die Aufgabe zugrunde, einen Druckminderer der eingangs genannten Art zu schaffen, der die Verarbeitung von Reinstgasen ermöglicht und gewährleistet, daß in dem den Gehäusegrundkörper verlassenden Gasstrom möglichst keine Fremdpartikel, insbesondere keine Wassertröpfchen, Aerosole oder Staubpartikel enthalten sind.

Diese Aufgabe ist erfindungsgemäß dadurch gelöst, daß die Anschlußstutzen einstückig mit dem Gehäusegrundkörper ausgebildet sind.
und jeweils ein Außengewinde aufweisen und daß der Gehäusegrundkörper aus einem Cr-Ni-Stahl besteht mit folgender Zusammensetzung:

Cr: von 10,5 % bis 20,0 %, vorzugsweise von 10,5 % bis 18,5 %

Ni: von 8,5 % bis 14,0 %, vorzugsweise von 11,0 % bis 14,0 %

C : von 0,03 % bis 0,12 %, vorzugsweise von 0,03 % bis 0,07 %

Überraschenderweise wurde nämlich gefunden, daß das Auftreten der obengenannten Störpartikel darauf zurückzuführen ist, daß sich über eine längere Betriebsdauer hinweg an feinsten Ritzen oder Fugen des Gehäusegrundkörpers Fremdkörper, wie beipielsweise Wassertröpfchen, aufbauen können, die sich nach längerer Betriebsdauer losreißen und in den Fluidstrom geraten. Es wurde gefunden, daß die eingangs geschilderte Art und Weise des Befestigens der Anschlußstutzen an dem Gehäusegrundkörper die Entstehung feinster Fugen und somit die Akkumulierung von Fremdstoffen zu einem Störpartikel ermöglicht. Durch die erfindungsgemäße Lösung, nach der die Anschlußstutzen einstückig mit dem Gehäusegrundkörper ausgebildet sind, ist sichergestellt, daß keinerlei Übergangsfuge zwischen dem rohrförmigen Anschlußstutzen und dem Grundkörper verbleibt, die die oben geschilderten nachteiligen Folgen haben könnte. Das Gas kann vielmehr spaltfrei ohne Toträume zu den Funktionselementen des Druckminderers geführt werden.

Dadurch, daß der Gehäusegrundkörper aus einem Chromnickelstahl der im Patentanspruch 1 angegebenen Zusammensetzung gefertigt ist, ist die Gefahr von Korrosion oder sonstigen Veränderungen und somit die Gefahr der Kontaminierung der zu verarbeitenden Gase sicher vermieden, sodaß der Druckminderer gemäß der Erfindung sich vorzüglich für Dotiergase höchster Reinheit eignet.

Die Herstellung des Gehäusegrundkörpers gemäß der Erfindung geschieht vorteilhafterweise durch Drehen oder Fräsen, d.h. die rohrförmigen Anschlußstutzen werden gewissermaßen "aus dem Vollen" gedreht.

Eine andere Ausführungsform der Erfindung, bei der der Gehäusegrundkörper geschmiedet oder gewalzt ist, zeichnet sich durch geringeren Materialverbrauch aus. Das gleiche gilt für eine Ausführungsform bei der der Gehäusegrundkörper gegossen ist.

Nach einer weiteren vorteilhaften Ausführungsform sind die Oberflächen des Gehäusegrundkörpers innen und außen elektropoliert. Auf diese Weise werden vollkommen glatte Oberflächen erzielt, so daß die Anlagerung von Schmutzpartikeln oder Wassertröpfchen nicht möglich ist.

Nach einer weiteren vorteilhaften Ausführungsform sind die Anschlußstutzen an ihrem zum Gehäusegrundkörper hin weisenden Ende verbreitert, wodurch sich eine besonders stabile Form ergibt. Als vorteilhaft hat sich erwiesen, dem Gehäusegrundkörper eine Umrißform eines regelmäßigen Vielecks, beispielsweise eines Sechsecks zu verleihen, wobei mehrere Anschlußstutzen jeweils mittig an den Seitenflächen des Vielecks angeordnet sind. Insbesondere bei der Herstellung des Gehäusegrundkörpers durch Drehen oder Fräsen hat sich diese Bauweise als besonders günstig bei der Herstellung erwiesen.

Die Stirnseiten der freien Enden der Anschlußstutzen sind für die Durchführung einer Orbitalverschweißung (Stumpfverschweißung) ausgeformt. Bei dieser Art der Verschweißung entstehen an der Nahtstelle keinerlei Fugen, Spalte oder Risse, durch die die unerwünschten Partikelakkumulation ausgelöst werden könnte.

Die Erfindung wird nachfolgend anhand des in den Figuren 1 bis 6 gezeigten Ausführungsbeispiele näher erläutert. Es zeigt:

**Figur 1:** einen Axialschnitt eines Druckminderers;

**Figur 2:** eine Draufsicht des Gehäusegrundkörpers des Druckminderers der Figur 1 in verkleinertem Maßstab;

**Figur 3:** einen Axialschnitt längs der Schnittlinie III-III in Figur 2;

**Figur 4:** eine Draufsicht eines Gehäusegrundkörpers nach einer weiteren Ausführungsform;

**Figur 5:** einen Axialschnitt längs der Schnittlinie A - C in Figur 4;

**Figur 6:** einen Schnitt längs der Schnittlinie D - E in Figur 4;

Für gleiche oder ähnliche Teile sind gleiche Bezugszeichen verwendet.

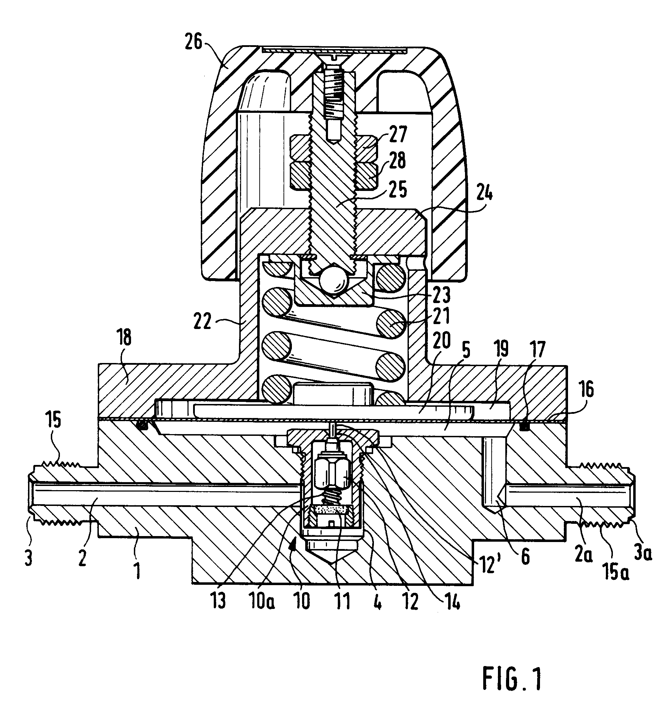

Der in Figur 1 gezeigte Druckminderer weist einen Gehäusegrundkörper 1 auf, der im wesentlichen aus einem in der Draufsicht sechseckigen massiven Edelstahlblock besteht. In diesem ist eine zentrale Ausnehmung 4 vorgesehen, die zur Aufnahme eines Reglereinsatzes 10 dient. Ein Radialkanal 2 erstreckt sich senkrecht zur Längsachse der Ausnehmung 4 und mündet im Mantel der Ausnehmung 4, etwa mittig. Die Ausnehmung 4 ist nach Art einer Sackbohrung ausgeführt. An ihrem offenen Ende geht sie in mehreren Stufen in einen erweiterten Abschnitt 5 über. In diesem erweiterten Abschnitt 5 der Ausnehmung 4 mündet ein achsparalleler, exzentrisch angeordneter Kanal 6, der mit einem weiteren Radialkanal 2a in Verbindung steht.

Die Radialkanäle 2 und 2a gehen nach außen hin in Anschlußstutzen 3 bzw. 3a über. Die Anschlußstutzen sind dadurch hergestellt, daß von einem Rohling entsprechender Größe durch Drehen und Fräsen Material rings um die Anschlußstutzen abgetragen wurde und die Anschlußstutzen somit stehengeblieben sind. Die Anschlußstutzen 3 und 3a sind somit einstückig mit dem Gehäusegrundkörper und weisen ein Außengewinde 15 bzw. 15a auf. Das Außengewinde ist ebenfalls mit dem Anschlußstutzen und dem Gehäusegrundkörper einstückig. Es dient zur Aufnahme einer Überwurfmutter, wie weiter unten näher erläutert wird. In die Ausnehmung 4 ist ein Reglereinsatz 10 eingepaßt. Dieser besteht aus einem etwa zylinderischen Gehäuse 10a mit Außengewinde, das in ein entsprechendes Gewinde an der Innenwandung der Ausnehmung 4 eingeschraubt ist. In dem Bereich, in dem der Radialkanal 2 in die Ausnehmung 4 mündet, ist der Durchmesser des Reglereinsatzgehäuses 10a kleiner als die lichte Weite der Ausnehmung 4, so daß ein Ringspalt entsteht. An der dem sackförmigen Ende der Ausnehmung 4 zugewandten Stirnseite ist der Reglereinsatz 10 durch ein Sintermetallfilter 11 abgeschlossen. An der gegenüberliegenden Seite weist der Reglereinsatz 10 eine Sitzdüse 14 auf. In die Sitzdüse 14 ragt ein Regelkonus 12 hinein, der mittels einer Druckfeder 13 in Richtung auf die Sitzdüse 14 vorgespannt ist und diese verschließt.

Der Gehäusegrundkörper 1 ist an der offenen Seite der Ausnehmung 4 mit einer elastischen Membran 16 abgedeckt. Zur Herstellung einer dichten Verbindung dient eine Ringnut 17, in der eine O-Ring Dichtung angeordnet ist. Die elastische Membran 16 wird auf den Gehäusegrundkörper 1 durch einen Gehäusedeckel 18 gepreßt. Die Anpressung zwischen dem Gehäusedeckel 18 und dem Gehäusegrundkörper 1 erfolgt über axial verlaufende Schrauben, die jedoch in der in Figur 1 gewählten Schnittdarstellung nicht erkennbar sind.

Der Gehäusedeckel 18 ist in seiner Form an die Form des Gehäusegrundkörpers 1 angepaßt. Er weist insbesondere an seiner dem Gehäusegrundkörper 1 zugewandten Seite eine zylindrische Vertiefung 19 auf, die in ihrem Durchmesser etwa dem Durchmesser des erweiterten Abschnittes 5 der Ausnehmung 4 entspricht, derart, daß die Membran 16 etwa durch die Mittes des flachen zylindrischen Raumes verläuft, der aus dem erweiterten Abschnitt 5 der Ausnehmung 4 und der zylindrischen Vertiefung 19 im Gehäusedeckel 18 gebildet wird. Auf der dem Gehäusedeckel 18 zugewandten Seite der Membran 16 ist ein Teller 20 angeordnet, der als Sitz für eine Druckfeder 21 dient. Die Druckfeder 21 ist in einem rohrförmigen Abschnitt 22 des Gehäusedeckels 18 geführt. Der zweite Sitz 23 der Druckfeder 21 ist axial verschieblich ausgeführt. Hierzu ist zentral in der den rohrförmigen Abschnitt abschließenden Stirnplatte eine zentrale Bohrung mit Innengewinde vorgesehen. Durch diese Bohrung ragt eine Spindel 25, die sich über eine Kugel an dem zweiten Federsitz 23 abstützt. Die Spindel 25 ist über ein Handrad 26 zu drehen. Zwei Anschlagmuttern 27 und 28 dienen zur Begrenzung des axialen Verschiebungsweges der Gewindespindel 24.

Der Druckminderer arbeitet wie folgt:
Durch den Radialkanal 2 strömt Hochdruckgas in den zwischen dem Reglereinsatzgehäuse 10a und der Wandung der Ausnehmung 4 gebildeten Ringraum, das von dort weiter über das stirnseitige Sintermetallfilter 11 in den Innenraum des Reglereinsatzgehäuses 10a strömt. Durch die Kraft der Druckfeder 21 wird die Membran 16 in Richtung auf den Regelkonus 12 gedrückt und stützt sich an dessen stiftförmigen Ansatzteil 12' ab. Hierdurch wird der Regelkonus 12 aus seiner Sitzdüse 14 entfernt und gibt einen Ringspalt frei. Das in den Innenraum des Reglereinsatzes 10 eingeströmte Gas strömt über diesen Ringspalt in den erweiterten Abschnitt 5 der Ausnehmung 4. Je nach dem, welche Gasmenge über den exzentrischen Axialkanal 6 und den Radialkanal 2a abgeleitet wird, baut sich in dem durch die Membran 16 und den erweiterten Abschnitt 5 gebildeten Raum ein Druck auf, der die Membran 16 entgegen der Wirkung der Feder 21 in Richtung von der Sitzdüse 14 wegdrückt. Infolgedessen wird der Regelkonus 12 durch die Wirkung der Druckfeder 13 in Richtung auf die Sitzdüse 14 gedrückt und der Ringspalt zwischen dem Regelkonus 12 und der Sitzdüse 14 wird verkleinert oder geschlossen. Auf diese Weise wird die Gaszufuhr in den aus dem erweiterten Abschnitt 5 und den Kanälen 6 und 2a gebildeten Niederdruckteil verringert. Es stellt sich in dem Niederdruckteil somit ein konstanter Druck ein, der in weiten Grenzen unabhängig von der Menge des über den Anschlußstutzen 3a entnommenen Gases ist. Die Größe des Druckes ist vielmehr nur abhängig vom Verhältnis der auf die Membran einwirkenden entgegengesetzt gerichteten Kräfte.

Durch eine Rechtsdrehung am Handrad 26 wird die Spindel 25 in den Gehäusedeckel 18 eingeschraubt, wodurch der Federsitz 23 in Richtung auf die Membran bewegt wird, so daß sich die auf die Membran 16 einwirkende Federkraft erhöht.

Dies hat zur Folge, daß zur Erzielung des Kräftegleichgewichtes in dem erweiterten Abschnitt 5 ebenfalls ein erhöhter Druck herrschen muß. Solange dort dieser erhöhte Druck nicht erreicht ist, wird durch die Kraft der Feder 21 die Membran in Richtung auf die Düse 14 gedrückt und diese geöffnet, so daß Hochdruckgas solange nachströmen kann, bis das Kräftegleichgewicht erzielt und die Sitzdüse 14 soweit verschlossen ist, daß die zuströmende Menge gleich der abgezogenen Menge ist und sich auf diese Weise ein konstanter Druck einstellt.

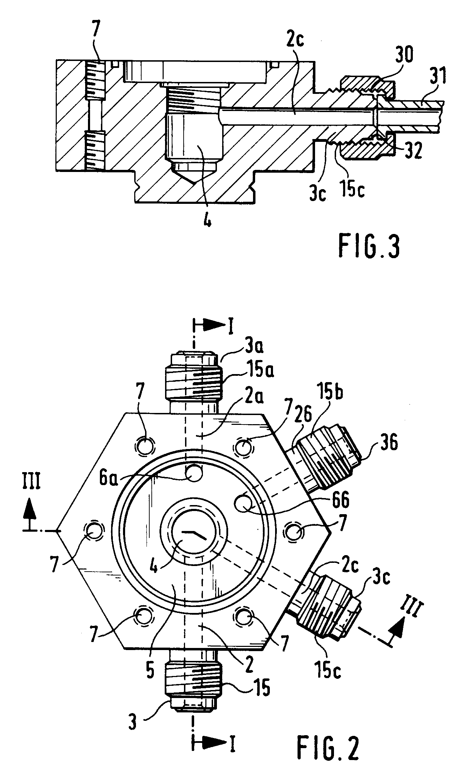

Der Gehäusegrundkörper 1 ist in Figur 2 in der Draufsicht gezeigt. Wie aus Figur 2 ersichtlich, besteht er aus einem sechseckigen massiven Block. Figur 2 zeigt auch die zentrale Ausnehmung 4 mit ihrem erweiterten Abschnitt 5. Ebenfalls ist in Figur 2 der Radialkanal 2 zu erkennen, der an einer Seitenwand der zentralen Ausnehmung 4 mündet. Um 60° versetzt zu diesem Kanal 2 ist ein weiterer Radialkanal 2c vorgesehen, so daß die beiden Kanäle 2 und 2c sternförmig auf das Zentrum des Gehäusegrundkörpers zulaufen.

In den erweiterten Abschnitt 5 der Ausnehmung 4 münden exzentrisch angeordnete Axialkanäle 6a und 6b. Die exzentrischen Axialkanäle 6a und 6b stehen ihrerseits mit ebenfalls sternförmig auf das Zentrum des Gehäusegrundkörpers zulaufenden Radialkanälen 2a und 2b in Verbindung. Sechs Längsbohrungen 7 im Gehäusegrundkörper dienen zur Aufnahme von Schrauben zur Befestigung des Gehäusedeckels 18 (Figur 1). An vier der sechs Seitenflächen des Gehäusegrundkörpers sind mit den Kanälen 2, 2a, 2b und 2c fluchtende Anschlußstutzen 3, 3a, 3b und 3c angeformt. Diese sind dadurch hergestellt, daß von einem Rohling entsprechender Größe durch Drehen und Fräsen Material rings um die Anschlußstutzen abgetragen wurde und die Anschlußstutzen somit stehengeblieben sind. Die Anschlußstutzen 3, 3a, 3b, 3c weisen jeweils ein ebenfalls einstückiges gedrehtes Außengewinde 15, 15a, 15b, 15c auf.

Figur 3 zeigt einen Schnitt längs der Schnittlinie III-III. Es ist der kompakte Gehäusegrundkörper 1 mit der zentralen Ausnehmung 4 zu erkennen. An der Seitenwand der zentralen Ausnehmung 4 mündet der Radialkanal 2c. Der Anschlußstutzen 3c ist einstückig mit den übrigen Teilen des Gehäusegrundkörpers 1. Der Kanal 2c, der bis zum Ende des Anschlußstutzens 3c fortgesetzt ist, wurde durch Bohren hergestellt.

Er ist mit einem Außengewinde 15c versehen, das mit dem Innengewinde einer Überwurfmutter 30 zusammenwirkt. Durch die Überwurfmutter 30 wird eine Anschlußrohrstück 31, das eine Andrückschulter 32 aufweist, fest gegen die Stirnseite des Anschlußstutzens 3c gepreßt. Je nach Einsatzzweck kann eine Dichtscheibe zwischen der Stirnseite des Anschlußstutzens 3c und der Stirnseite des Anschlußrohres 31 vorgesehen werden. Vorzugsweise ist eine solche Dichtscheibe (nicht dargestellt) aus versilbertem Edelstahl oder elektropoliert. Ein solcher Anschluß kann vollkommen frei von Toträumen und Spalten durchgeführt werden, so daß die Anlagerung von feinsten Partikeln sicher verhindert wird. In Verfolgung desselben Zieles ist der gesamte Gehäusegrundkörper innen und außen elektropoliert.

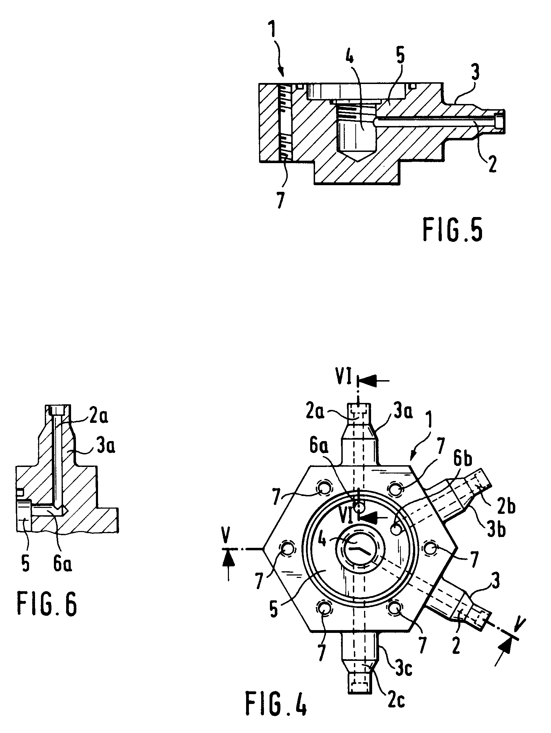

In Figur 4 ist ein weiteres Ausführungsbeispiel dargestellt. Von diesem ist nur der Gehäusegrundkörper gezeigt, da der Aufbau der übrigen Teile des Druckminderers sich von dem Aufbau gemäß Figur 1 nicht unterscheidet.

Der Gehäusegrundkörper gemäß Figur 4 besteht aus einem sechseckigen massiven Edelstahlblock. In diesem ist eine zentrale Ausnehmung 4 vorgesehen, die zur Aufnahme eines Regelventiles dient. Radialkanäle 2, 2c münden an einer Seitenwand der zentralen Ausnehmung 4.

Die Ausnehmung 4 weist einen erweiterten Abschnitt 5 auf. In diesen münden exzentrisch angeordnete Axialkanäle 6a 6b. Die exzentrischen Axialkanäle 6a und 6b stehen ihrerseits mit Radialkanälen 2a bzw. 2b in Verbindung. Sechs Längsbohrungen 7 im Gehäusegrundkörper dienen zur Aufnahme von Schrauben zur Befestigung eines Gehäusedeckels, der unter Zwischenschaltung einer federbelastenden Membran dicht auf den Gehäusegrundkörper aufgesetzt wird, so daß der erweiterte Abschnitt 5 und die Ausnehmung 4 abgeschlossen werden.

An vier der sechs Seitenflächen des Gehäusegrundkörpers sind mit den Kanälen 2, 2a, 2b und 2c fluchtende Anschlußstutzen 3 , 3a, 3b und 3c angeformt. Diese sind dadurch hergestellt, daß von einem Rohling entsprechender Größe durch Drehen und Fräsen Material rings um die Anschlußstutzen abgetragen wurde und die Anschlußstutzen somit stehengeblieben sind. Die Anschlußstutzen 2, 2a, 2b, 2c sind nur an ihren freien Enden auf den gewünschten Druchmesser gearbeitet, während sie zum Gehäusegrundkörper hin verbreitert sind, so daß sich eine besonders stabile Bauweise ergibt. Die Stirnseiten der freien Enden sind für eine Orbitalverschweißung (unter Schutzgas) ausgeformt. Diese Verschweißung kann vollkommen frei von Haarrissen durchgeführt werden, so daß der Weg des in den Gehäusegrundkörper eingeleiteten und aus diesem ausgeleiteten Gases völlig frei von Toträumen und Spalten ist, die die Akkumulation von feinsten Partikeln begünstigen könnte. In Verfolgung desselben Zieles ist der gesamte Gehäusegrundkörper innen und außen elektropoliert.

Figur 5 zeigt einen Schnitt längs der Schnittlinie A - C in Figur 4. Es ist der kompakte Gehäusegrundkörper 1 mit der zentralen Ausnehmung 4 zu erkennen. An einer Seitenwand der zentralen Ausnehmung 4 mündet der Radialkanal 2. Der Anschlußstutzen 3 ist einstückig mit den übrigen Teilen des Gehäusegrundkörpers 1. Der Kanal 2, der bis zum Ende des Anschlußstutzens 3 fortgesetzt ist, wurde durch Bohren hergestellt. Das freie Ende des Anschlußstutzens 3 ist für die Durchführung einer Orbitalverschweißung ausgeformt.

Figur 6 zeigt einen Schnitt längs der Schnittlinie D - E in Figur 4. Der Anschlußstutzen 3a entspricht im wesentlichen dem Anschlußstutzen 3 in Figur 4. Der Radialkanal 2a geht jedoch - anders als bei dem Schnitt der Figur 4 - in einen Axialkanal 6a über, der wiederum in den erweiterten Abschnitt 5 der Ausnehmung 4 mündet.

## Patentansprüche

1. Druckminderer für Gase höchster Reinheit mit einem massiven, blockförmigen Gehäusegrundkörper (1), der mehrere, mit vorstehenden rohrförmigen Anschlußstutzen (3, 3a, 3b, 3c) in Verbindung stehende, sternförmig auf die Mitte des Gehäusegrundkörpers (1) zulaufende Fluidkanäle (2, 2a, 2b, 2c) aufweist, dadurch gekennzeichnet, daß die Anschlußstutzen (3, 3a, 3b, 3c) einstückig mit dem Gehäusegrundkörper (1) ausgebildet sind und daß der Gehäusegrundkörper (1) aus einem Cr-Ni-Stahl besteht, mit folgenden Bestandteilen:

   Cr: von 10,5 % bis 20,0 %, vorzugsweise von 10,5 % bis 18,5 %
   Ni: von 8,5 % bis 14,0 %, vorzugsweise von 11,0 % bis 14,0 %
   C : von 0,03 % bis 0,12 %, vorzugsweise von 0,03 % bis 0,07 %

2. Druckminderer nach Anspruch 1, dadurch gekennzeichnet, daß der Gehäusegrundkörper (1) gewalzt oder geschmiedet ist.

3. Druckminderer nach Anspruch 1, dadurch gekennzeichnet, daß der Gehäusegrundkörper (1) gegossen ist.

4. Druckminderer nach einem der Ansprüche 1 bis 3, dadurch gekennzeichnet, daß die Oberflächen des Gehäusegrundkörpers (1) elektropoliert sind.

5. Druckminderer nach einem der Ansprüche 1 bis 4, dadurch gekennzeichnet, daß die Anschlußstutzen (3, 3a, 3b, 3c) in Richtung auf ihr freies Ende verjüngt sind.

6. Druckminderer nach einem der Ansprüche 1 bis 5, dadurch gekennzeichnet, daß der Gehäusegrundkörper (1) in der Draufsicht die Umrißform eines regelmäßigen Vielecks aufweist, und daß die Anschlußstutzen (3, 3a, 3b, 3c) mittig jeweils an einigen oder allen der Seitenflächen des Vielecks angeordnet sind.

7. Druckminderer nach einem der Ansprüche 1 bis 6, dadurch gekennzeichnet, daß die Stirnseite der freien Enden der Anschlußstutzen (3, 3a, 3b, 3c) für die Durchführung einer Orbitalverschweißung ausgeformt sind.

8. Druckminderer nach einem der Ansprüche 1 bis 6, dadurch gekennzeichnet, daß die Anschlußstutzen (3, 3a, 3b, 3c) ein Außengewinde (15, 15a, 15b, 15c) aufweisen.

**Claims**

1. Pressure reducing valve for gases of very high purity with a massive, block-shaped housing base body (1) which has a plurality of fluid passages (2, 2a, 2b, 2c) which extend inwardly towards the centre of the housing base body (1) in a star pattern and communicate with projecting, tubular connecting sockets (3, 3a, 3b, 3c), characterised in that the connecting sockets (3, 3a, 3b, 3c) are constructed integrally with the housing base body (1) and that the housing base body (1) comprises a Cr-Ni steel with the following constituents:

   Cr: from 10.5% to 20%, preferably from 10.5% to 18.5%

   Ni: from 8.5% to 14.0%, preferably from 11.0% to 14.0%

   C: from 0.03% to 0.12%, preferably from 0.03% to 0.07%.

2. Pressure reducing valve as claimed in Claim 1, characterised in that the housing base body (1) is rolled or forged.

3. Pressure reducing valve as claimed in Claim 1, characterised in that the housing base body (1) is cast.

4. Pressure reducing valve as claimed in one of Claims 1 to 3, characterised in that the surfaces of the housing base body (1) are electropolished.

5. Pressure reducing valve as claimed in one of Claims 1 to 4, characterised in that the connecting sockets (3, 3a, 3b, 3c) are tapered in the direction of their free end.

6. Pressure reducing valve as claimed in one of Claims 1 to 5, characterised in that the housing base body (1) has the outline shape of a regular polygon in plan view and that the connecting sockets (3, 3a, 3b, 3c) are each arranged centrally on some or all of the side surfaces of the polygon.

7. Pressure reducing valve as claimed in one of Claims 1 to 6, characterised in that the end surface of the free ends of the connecting sockets (3, 3a, 3b, 3c) is shaped for carrying out orbital welding.

8. Pressure reducing valve as claimed in one of Claims 1 to 6, characterised in that the connecting sockets (3, 3a, 3b, 3c) have an external screw thread (15, 15a, 15b, 15c).

**Revendications**

1. Détendeur pour des gaz très purs, dont le corps de base de bâti (1) est massif, en forme de bloc et présente plusieurs canaux de fluide (2,2a,2b,2c), qui, partant en étoile du centre du corps de base de bâti (1), sont reliés à des ajutages tubulaires saillants (3,3a,3b,3c), caractérisé en ce que les ajutages (3,3a,3b,3c) sont constitués d'une pièce avec le corps de base de bâti (1) et en ce que le corps de base de bâti (1) est en acier Cr-Ni comportant les composants suivants :

   Cr: de 10,5 à 20%, de 10,5 à 18,5% de préférence

   Ni: de 8,5 à 14%, de 11 à 14% de préférence

   C: de 0,03 à 0,12%, de 0,03 à 0,07% de préférence

2. Détendeur selon la revendication 1, caractérisé en ce que le corps de base de bâti (1) est laminé ou forgé.

3. Détendeur selon la revendication 1, caractérisé en ce que le corps de base de bâti (1) est coulé.

4. Détendeur selon l'une des revendications 1 à 3, caractérisé en ce que les surfaces du corps de base de bâti (1) ont subi un polissage électrolytique.

5. Détendeur selon l'une des revendications 1 à 4, caractérisé en ce que les ajutages (3,3a,3b,3c) se rétrécissent en direction de leur extrémité libre.

6. Détendeur selon l'une des revendications 1 à 5, caractérisé en ce que le corps de base de bâti (1) présente, vu d'en haut, le contour d'un polygone régulier et en ce que les ajutages (3,3a,3b,3c) sont respectivement placés au milieu de certaines ou de toutes les faces latérales du polygone.

7. Détendeur selon l'une des revendications 1 à 6, caractérisé en ce que les faces frontales des extrémités libres des ajutages (3,3a,3b,3c) sont conformées pour le passage d'un soudage orbital.

8. Détendeur selon l'une des revendications 1 à 6, caractérisé en ce que les ajutages (3,3a,3b,3c) présentent un filetage externe (15,15a,15b,15c).

FIG.1

FIG.3

FIG.2

EP 0 220 599 B1

FIG.5

FIG.6

FIG.4